(19) Europäisches Patentamt
European Patent Office
Office européen des brevets

(11) EP 1 537 681 B1

(12) **EUROPÄISCHE PATENTSCHRIFT**

(45) Veröffentlichungstag und Bekanntmachung des Hinweises auf die Patenterteilung:
**05.10.2011 Patentblatt 2011/40**

(21) Anmeldenummer: **03794794.2**

(22) Anmeldetag: **22.08.2003**

(51) Int Cl.:
***H04B 1/707*** (2011.01)

(86) Internationale Anmeldenummer:
**PCT/DE2003/002814**

(87) Internationale Veröffentlichungsnummer:
**WO 2004/025858 (25.03.2004 Gazette 2004/13)**

# (54) EINRICHTUNG UND VERFAHREN ZUR DURCHFÜHRUNG VON KORRELATIONEN IN EINEM MOBILFUNKSYSTEM

DEVICE AND METHOD FOR CARRYING OUT CORRELATIONS IN A MOBILE RADIO SYSTEM

DISPOSITIF ET PROCEDE POUR REALISER DES CORRELATIONS DANS UN SYSTEME RADIOTELEPHONIQUE MOBILE

(84) Benannte Vertragsstaaten:
**DE FR GB**

(30) Priorität: **09.09.2002 DE 10241691**

(43) Veröffentlichungstag der Anmeldung:
**08.06.2005 Patentblatt 2005/23**

(73) Patentinhaber: **Infineon Technologies AG**
**85579 Neubiberg (DE)**

(72) Erfinder:
- **BECKER, Burkhard**
**85737 Ismaning (DE)**
- **LE, Thuyen**
**71101 Schönaich (DE)**
- **PAUL, Steffen**
**82065 Baierbrunn (DE)**
- **RUPRICH, Thomas**
**80339 München (DE)**

(74) Vertreter: **Patentanwälte Lambsdorff & Lange**
**Dingolfinger Strasse 6**
**81673 München (DE)**

(56) Entgegenhaltungen:
**EP-A- 1 109 324**
**WO-A-01/56199**
**US-A1- 2001 048 713**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 1 537 681 B1

**Beschreibung**

Die Erfindung betrifft eine Einrichtung und ein Verfahren zur Durchführung von Korrelationen in einem Mobilfunksystem, in welchem Daten über Funk zwischen einer Basisstation und mindestens einem Mobilfunkgerät ausgetauscht werden.

In Mobilfunksystemen werden verschiedene Aufgaben mit Hilfe von Korrelationsprozeduren bearbeitet. Ziel der Korrelationsprozeduren ist in der Regel, einlaufende Daten, die im Empfänger in Form des abgetasteten Empfangssignals vorliegen, mit einer Folge von im Empfänger bekannten Daten zu vergleichen. Ein aus diesem Vergleich erhaltenes Korrelationssignal zeigt unter anderem an, ob die Folge bekannter Daten in dem Empfangssignal identifiziert wurde. Ferner können anhand der Korrelationsprozeduren Informationen über den zeitlichen Versatz des Empfangssignals bezüglich eines vorgegebenen Timings gewonnen werden.

Ein Beispiel für die Anwendung von Korrelationsprozeduren in Mobilfunksystemen ist die Zeitschlitz- und Rahmensynchronisation. In Mobilfunksystemen werden Daten zwischen der Basisstation und dem Mobilfunkempfänger in der Regel in einer Zeitschlitz- und Rahmenstruktur übertragen. Zum Betrieb des Mobilfunksystems ist eine zeitliche Synchronität zwischen der Basisstation und dem Mobilfunkempfänger notwendig. Die dazu erforderliche Synchronisation des Mobilfunkempfängers wird unter anderem beim Einschalten des Mobilfunkempfängers oder beim Übergang in eine neue Zelle durchgeführt. Dabei wird zwischen der Zeitschlitz- und der Rahmensynchronisation unterschieden. Ziel der Zeitschlitzsynchronisation ist es, die Zeitschlitzgrenzen zu finden. Sind die Zeitschlitzgrenzen gefunden, so kann die Rahmensynchronisation durchgeführt werden. Dabei wird der Beginn eines Rahmens gesucht.

Für die Zeitschlitz- und Rahmensynchronisation stehen vorgegebene, jeweils aus einer Folge von Chips bestehende Synchronisationscodes zur Verfügung, die von jeder Basisstation zu Beginn jedes Zeitschlitzes ausgesendet werden und die in dem Mobilfunkempfänger vorliegen. Die empfangenen Synchronisationscodes werden in dem Mobilfunkempfänger mit den bekannten Synchronisationscodes korreliert. Aus den Korrelationsergebnissen werden die Zeitschlitz- und Rahmengrenzen ermittelt.

Der für die Zeitschlitzsynchronisation verwendete Zeitschlitzsynchronisationscode wird auch als Primary Synchronization Code (pSC) bezeichnet. Der für die Rahmensynchronisation herangezogene Rahmensynchronisationscode trägt auch die Bezeichnung Secondary Synchronization Code (sSC).

In dem UMTS (Universal Mobile Telecommunications System)-Standard umfasst der Zeitschlitzsynchronisationscode pSC 256 Chips und weist folgende Struktur auf:

$$\begin{aligned} pSC &= \langle a,a,a,-a,-a,a,-a,-a,a,a,a,-a,a,-a,a,a \rangle \\ &= a\,\langle 1,1,1,-1,-1,1,-1,-1,1,1,1,-1,1,-1,1,1 \rangle \end{aligned} \qquad (1)$$

$$\begin{aligned} a &= (1+j)\,\langle 1,1,1,1,1,1,-1,-1,1,-1,1,-1,1,-1,-1,1 \rangle \\ &= (1+j)\,\langle a(0),a(1),a(2),a(3),a(4),a(5),a(6),a(7),a(8), \\ &\qquad a(9),a(10),a(11),a(12),a(13),a(14),a(15) \rangle \end{aligned} \qquad (2)$$

Dabei wird die komplexwertige Grundfolge a aus einer Folge von 16 Korrelationskoeffizienten a(n) (n = 0, 1, ..., 15) erzeugt, welche jeweils entweder den Wert +1 oder den Wert -1 annehmen können. Jeder der Korrelationskoeffizienten a(n) steht für ein Chip.

Der Zeitschlitzsynchronisationscode pSC besteht aus einer Folge von 16 Folgengliedern. Jedem Folgenglied liegt wiederum die Grundfolge a zugrunde, welche jeweils entweder mit +1 oder mit -1 multipliziert ist. Folglich weist der Zeitschlitzsynchronisationscode pSC insgesamt 256 Korrelationskoeffizienten a(n) bzw. Chips auf.

Gemäß dem UMTS-Standard besteht ein Rahmensynchronisationscode sSC aus 256 Chips. Jeder Rahmensynchronisationscode sSC ergibt sich aus einer positionsweisen Multiplikation einer erzeugenden Hadamard-Folge mit einer allen Rahmensynchronisationscodes sSC gemeinsamen Folge z, welche folgendermaßen aufgebaut ist:

$$\begin{aligned} z &= \langle b,b,b,-b,b,b,-b,-b,b,-b,b,-b,-b,-b,-b,-b \rangle \\ &= b\,\langle 1,1,1,-1,1,1,-1,-1,1,-1,1,-1,-1,-1,-1,-1 \rangle \end{aligned} \qquad (3)$$

$$b = (1+j) <1,1,1,1,1,1,-1,-1,-1,1,-1,1,-1,1,1,-1> = (1+j) <b(0),b(1),b(2),b(3),b(4),b(5),b(6),b(7),b(8), b(9),b(10),b(11),b(12),b(13),b(14),b(15)> \quad (4)$$

Dabei wird die komplexwertige Grundfolge b aus einer Folge von 16 Korrelationskoeffizienten b(n) (n = 0, 1, ..., 15) erzeugt, welche jeweils entweder den Wert +1 oder den Wert -1 annehmen können. Jeder der Korrelationskoeffizienten b(n) steht für ein Chip.

Die Folge z besteht aus einer Folge von 16 Folgengliedern. Jedem Folgenglied liegt wiederum die Grundfolge b zugrunde, welche jeweils entweder mit +1 oder mit -1 multipliziert ist. Folglich weist die Folge z insgesamt 256 Korrelationskoeffizienten b(n) bzw. Chips auf.

Durch die positionsweise Multiplikation der Folge z mit 16 unterschiedlichen Hadamard-Folgen mit jeweils 256 Chips ergeben sich 16 unterschiedliche Rahmensynchronisationscodes mit jeweils 256 Chips. In jedem Zeitschlitz eines Rahmens wird ein bestimmter Rahmensynchronisationscode von der Basisstation ausgesendet. Die Reihenfolge der Rahmensynchronisationscodes ist bei einer gegebenen Basisstation in jedem Rahmen gleich. Aus dem sich daraus ergebenden Muster der Rahmensynchronisationscodes pro Rahmen kann auf den Rahmenbeginn geschlossen werden. Ferner ist dieses Muster für jede Basisstation charakteristisch und dient daher des Weiteren zur Bestimmung der die Rahmensynchronisationscodes aussendenden Basisstation.

Bei der Zeitschlitzsynchronisation werden die in den Mobilfunkempfänger eingehenden Chips des Zeitschlitzsynchronisationscodes bzw. deren Abtastwerte mit dem bekannten Zeitschlitzsynchronisationscode, beispielsweise mit Hilfe eines Matched-Filters, korreliert. Das Matched-Filter führt sukzessive Korrelationsprozeduren über 256 Abtastwerte durch, wobei der Versatz von zwei aufeinander folgenden Korrelationsprozeduren beispielsweise einer halben Chiplänge entspricht. Nach dem UMTS-Standard enthält ein Zeitschlitz 2560 Chips, sodass das Matched-Filter üblicherweise 5120 Korrelationswerte pro Zeitschlitz errechnet.

Nach Abschluss der für die Zeitschlitzsynchronisation benötigten Korrelationen werden die Korrelationen für die Rahmensynchronisation durchgeführt. Für die Startindizes dieser Korrelationen werden beispielsweise die Startindizes herangezogen, die bei der Zeitschlitzsynchronisation die höchsten Korrelationswerte ergaben. Beginnend bei einem Startindex werden für die Rahmensynchronisation 256 Abtastwerte positionsweise mit der Folge z multipliziert. Parallel dazu wird die Summe aus den Multiplikationsergebnissen von jeweils 16 aufeinander folgenden Abtastwerten gebildet, wodurch sich 16 Teilkorrelationswerte ergeben. Ein Teilkorrelationswert entspricht einer Korrelation der in dem Teilkorrelationswert verarbeiteten 16 Abtastwerte mit der Grundfolge b, die der Folge z zugrunde liegt. Hierbei muss das Vorzeichen +1 oder - 1, mit dem die Grundfolge b in Abhängigkeit von ihrer Position in der Folge z multipliziert wird, berücksichtigt werden. Insgesamt ergeben sich folglich 16 komplexwertige Teilkorrelationswerte für einen Startindex.

Bedingt durch den Aufbau eines Rahmensyhchronisationscodes sSC aus der Folge z und einer Hadamard-Folge müssen die 16 komplexwertigen Teilkorrelationswerte noch einer 16-Punkt Hadamard-Transformation unterzogen werden.

Zur Durchführung der vorstehend beschriebenen Korrelationen werden die von dem Mobilfunkempfänger aufgenommenen Abtastwerte der Synchronisationscodes in der Regel zunächst in einem Datenspeicher zwischengespeichert und anschließend dem Matched-Filter zur Korrelation zugeführt. Nachdem eine Korrelation über 256 Abtastwerte durchgeführt wurde, wird ein neuer Startindex bestimmt, vom dem aus beginnend wiederum aus 256 Abtastwerten ein Korrelationswert errechnet wird. Nachteilig an diesem Vorgehen ist, dass vor Beginn einer neuen Korrelation die in dem Datenspeicher abgelegten Abtastwerte in geeigneter Weise für die Durchführung der Korrelation umsortiert werden müssen. Beispielsweise kann die Umsortierung mittels eines Schieberegisters vorgenommen werden. Im minimalen Fall müssen für eine derartige Umsortierung 256 Abtastwerte verschoben werden. Dies hat eine hohe Leistungsaufnahme des Datenspeichers zur Folge.

Ein Beispiel eines Korrelationssystems mit einem mehrwertigen Speicher, um mehrere unabhängige Korrelationsschaltungen mit einem Spreizcode zu speisen, wurde in der veröffentlichte US-Patentanmeldung US 2001/0048713 A1 offenbart.

Aufgabe der Erfindung ist es, eine Einrichtung zur Durchführung einer Korrelation in einem Mobilfunksystem zu schaffen, welche sich durch einen niedrigen Leistungsbedarf auszeichnet. Insbesondere soll die Einrichtung für die Zeitschlitz- und Rahmensynchronisation im UMTS-Standard verwendbar sein. Des Weiteren soll ein entsprechendes Verfahren angegeben werden.

Die der Erfindung zugrunde liegende Aufgabenstellung wird durch die Merkmale der unabhängigen Patentansprüche 1 und 14 gelöst. Vorteilhafte Weiterbildungen und Ausgestaltungen der Erfindung sind in den Unteransprüchen angegeben.

Die erfindungsgemäße Einrichtung, die zur Durchführung von Korrelationen in einem Mobilfunksystem dient, weist einen Datenspeicher, einen Adressgenerator, einen Codegenerator und eine Korrelatoreinheit auf.

Ein empfangenes Signal wird abgetastet, und die daraus erhaltenen Abtastwerte werden in der Reihenfolge, in der sie aufgenommen wurden, in den Datenspeicher eingelesen und dort abgespeichert.

Im Folgenden wird die in der erfindungsgemäßen Einrichtung durchgeführte Korrelation eines Datenworts, welches die Abtastwerte eines zusammenhängenden Abschnitts der Folge von Abtastwerten enthält, betrachtet.

Die zum Auslesen des Datenworts aus dem Datenspeicher notwendigen Adressen werden von dem Adressgenerator gemäß einer vorgegebenen Auslesevorschrift generiert. Dabei muss die Reihenfolge, in welcher die Abtastwerte in dem Datenwort angeordnet werden, nicht notwendigerweise die gleiche Reihenfolge sein, in welcher die Abtastwerte aufgenommen wurden. Vielmehr wird die Reihenfolge der Abtastwerte innerhalb des Datenworts durch die Reihenfolge der Abtastwerte innerhalb des Abschnitts, die Auslesevorschrift und die Organisationsstruktur des Datenspeichers bestimmt.

Ein Korrelationswort, mit welchem das Datenwort korreliert werden soll, wird von dem Codegenerator aus den Folgengliedern eines zusammenhängenden Abschnitts einer vorgegebenen Korrelationsfolge erzeugt. Die Reihenfolge, in welcher die Folgenglieder in dem Korrelationswort angeordnet werden, hängt von dem Datenwort ab.

Die Korrelatoreinheit führt schließlich die Korrelation des Datenworts mit dem Korrelationswort durch.

In bisherigen Korrelationseinrichtungen für Mobilfunksysteme werden für die Korrelationen der Datenwörter, welche die Abtastwerte enthalten, nur eine bestimmte Anzahl verschiedener Korrelationswörter verwendet. Die Korrelationswörter sind von vornherein festgelegt. Vor der Durchführung einer Korrelation werden in bisherigen Korrelationseinrichtungen die Abtastwerte in dem Datenspeicher so umsortiert, dass sich daraus durch einen einfachen und wenig aufwändigen Ausleseschritt das für die Korrelation benötigte Datenwort ergibt, in welchem die Abtastwerte in der Reihenfolge angeordnet sind, in der sie aufgenommen wurden.

Ein wesentlicher Gedanke der Erfindung besteht darin, dass in dem Datenspeicher vor einer Korrelation keine Umsortierung der Abtastwerte vorgenommen wird. Stattdessen werden die Abtastwerte aus dem Datenspeicher beispielsweise in ähnlicher Weise ausgelesen, wie sie dort vorgefunden werden. Das bedeutet, dass die Reihenfolge der Abtastwerte, in welcher diese aufgenommen wurden, nicht allein ausschlaggebend ist für die Reihenfolge, in welcher die Abtastwerte in dem Datenwort angeordnet werden. Daneben sind ferner die Auslesevorschrift und die Organisationsstruktur des Datenspeichers für die Anordnung der Abtastwerte in dem Datenwort mitverantwortlich. Da nun die Reihenfolge der Abtastwerte in dem Datenwort nicht mehr notwendigerweise ihrer chronologischen Reihenfolge entspricht, müssen die Folgenglieder der Korrelationsfolge in dem Korrelationswort entsprechend der Anordnung der Abtastwerte in dem Datenwort angeordnet werden.

Insgesamt wird durch das erfindungsgemäße Vorgehen eine erhebliche Leistungseinsparung beim Betrieb der Korrelationseinrichtung erzielt, da die Anzahl der in dem Korrelationswort angeordneten Folgenglieder im Allgemeinen erheblich kleiner ist als die Anzahl der in dem Datenspeicher abgelegten Abtastwerte und somit eine Umsortierung der Folgenglieder in dem Korrelationswort wesentlich weniger Aufwand verursacht als eine Umsortierung der Abtastwerte in dem Datenspeicher.

Vorteilhafterweise ist der Datenspeicher aus M separat adressierbaren Unterspeichern aufgebaut.

Beim Einlesen der Abtastwerte in den Datenspeicher werden die Abtastwerte vorzugsweise fortlaufend und zyklisch in die Unterspeicher eingelesen. So werden N nacheinander aufgenommene Abtastwerte in einen Unterspeicher eingelesen und die nachfolgenden N Abtastwerte werden in den nächsten Unterspeicher eingelesen. Sobald alle Unterspeicher einmal durchlaufen wurden, wird mit der Einleseprozedur wieder bei dem ersten Unterspeicher begonnen.

Beispielsweise kann bei dieser Einleseprozedur vorgesehen sein, dass pro Durchlauf durch die Unterspeicher in jeden Unterspeicher nur ein Abtastwert eingelesen wird, d.h. N ist gleich 1.

Gemäß einer bevorzugten Ausgestaltung der Erfindung liegt der Korrelationsfolge eine Grundfolge zugrunde. Beispielsweise kann es sich hierbei im Falle einer Korrelation für eine UMTS-Zeitschlitzsynchronisation um die Grundfolge a aus obiger Gleichung (2) oder im Falle einer Korrelation für eine UMTS-Rahmensynchronisation um die Grundfolge b aus obiger Gleichung (4) handeln.

Vorzugsweise wird das Korrelationswort dadurch erzeugt, dass die Grundfolge beginnend bei einem Folgenglied zyklisch durchlaufen wird.

Eine besonders bevorzugte Ausgestaltung der Erfindung sieht vor, dass das Datenwort aus M Abtastwerten und die Grundfolge aus M Folgengliedern bestehen. Ferner wird genau ein Abtastwert aus jedem Unterspeicher dem Datenwort zugeordnet.

Gedanklich lassen sich die Unterspeicher von 1 bis M fortlaufend durchnummerieren. Unter Beachtung der vorstehend aufgeführten besonders bevorzugten Ausgestaltung der Erfindung können die Abtastwerte in dem Datenwort ebenso von 1 bis M durchnummeriert werden. Ordnet man jeden dieser Abtastwerte einer Datenwort-Untereinheit zu, so lassen sich die Datenwort-Untereinheiten ebenfalls gedanklich von 1 bis M durchnummerieren. Eine weitere besonders bevorzugte Ausgestaltung der Erfindung ist dann dadurch gekennzeichnet, dass der Adressgenerator zum Auslesen des Datenworts gemäß der Auslesevorschrift eine Startadresse X vorgibt, welche einen Unterspeicher bezeichnet. Die in den Unterspeichern X bis M abgelegten Abtastwerte werden den Datenwort-Untereinheiten X bis M zugewiesen, und die in den Unterspeichern 1 bis X-1 abgelegten Abtastwerte werden den Datenwort-Untereinheiten 1 bis X-1 zugewiesen. Hierbei wird vorausgesetzt, dass die in den Unterspeichern X, ..., M, 1, ..., X-1 abgelegten Abtastwerte in der angegebenen Reihenfolge zeitlich nacheinander aufgenommen wurden. Diese Maßnahme stellt eine Möglichkeit dar, die Abtastwerte unter den gegebenen Voraussetzungen in besonders einfacher Weise dem Datenwort zuzuordnen.

Erfindungsgemäß muss die Anordnung der Folgenglieder in dem Korrelationswort der Anordnung der Abtastwerte in dem Datenwort angepasst werden. Dazu können zunächst die Folgenglieder der Grundfolge gedanklich auch von 1 bis M durchnummeriert werden. Ferner kann vorgesehen sein, dass das Korrelationswort Korrelationswort-Untereinheiten umfasst, denen jeweils ein Folgenglied zugeordnet wird und die gedanklich ebenfalls von 1 bis M durchnummeriert sind. Vorzugsweise werden dann die Werte für die Korrelationswort-Untereinheiten X bis M aus den Folgengliedern 1 bis M-(X-1) der Grundfolge erzeugt, und die Werte für die Korrelationswort-Untereinheiten 1 bis X-1 werden aus den Folgengliedern M-(X-1)+1 bis M der Grundfolge erzeugt.

Eine weitere bevorzugte Ausgestaltung der Erfindung sieht vor, dass sich die Korrelationsfolge aus einer Hintereinanderreihung von Grundfolgen zusammensetzt, wobei die Grundfolgen jeweils mit einem Vorzeichen beaufschlagt sind, das durch eine Komplementärfolge vorgegeben ist. Dient die Korrelation beispielsweise einer Zeitschlitzsynchronisation im UMTS-Standard, so sind die Korrelationsfolge durch den Zeitschlitzsynchronisationscode pSC, die Grundfolge durch die Grundfolge a aus obiger Gleichung (2) und die Komplementärfolge durch die Vorzeichenfolge aus obiger Gleichung (1) gegeben. Die Korrelation kann beispielsweise auch zum Zwecke einer Rahmensynchronisation im UMTS-Standard durchgeführt werden. In diesem Fall sind die Korrelationsfolge durch die Rahmensynchronisationscodes sSC, die Grundfolge durch die Grundfolge b aus obiger Gleichung (4) und die Komplementärfolge durch die Vorzeichenfolge aus obiger Gleichung (3) gegeben.

Vorteilhafterweise ist der Abschnitt der Korrelationsfolge, der zur Erzeugung des Korrelationsworts verwendet wird, eine vollständige Vorzeichen-behaftete Grundfolge der Korrelationsfolge.

Vorzugsweise werden die Abtastwerte, aus denen das Datenwort gebildet werden soll, gemäß der Auslesevorschrift in einem Ausleseschritt aus dem Datenspeicher ausgelesen. Diese Maßnahme kann vorteilhaft sein, um Echtzeitanforderungen bei der Korrelation zu gewährleisten.

Gemäß einer weiteren bevorzugten Ausgestaltung der Erfindung besteht der Datenspeicher aus einem Ringdatenpuffer. Ein Ringdatenpuffer zeichnet sich dadurch aus, dass Daten sukzessive in vorgegebene Speicherblöcke eingelesen werden. Sobald in sämtliche Speicherblöcke Daten geschrieben wurden, wird wieder von vorne begonnen, die Daten in die Speicherblöcke zu schreiben. Dabei werden zuvor eingelesene Daten mit neuen Daten überschrieben. Um keinen Datenverlust zu erleiden, müssen die in dem Ringdatenpuffer abgelegten Daten mit der gleichen Geschwindigkeit verarbeitet werden, mit der neue Daten in den Ringdatenpuffer eingelesen werden.

Zur Erzeugung des Korrelationsworts aus den Folgengliedern ist es vorteilhaft, dass der Codegenerator ein Schieberegister umfasst.

Ferner kann der Korrelatoreinheit vorzugsweise ein Matched-Filter zugrunde liegen.

Die erfindungsgemäße Einrichtung kann in besonders bevorzugter Weise in eine Synchronisationseinrichtung implementiert sein, mit welcher ein Mobilfunkempfänger mit einer Zeitschlitzstruktur und insbesondere einer Rahmenstruktur eines von einer Basisstation empfangenen Funksignals synchronisiert wird. Vorzugsweise basiert das Mobilfunksystem dabei auf dem UMTS-Standard.

Das erfindungsgemäße Verfahren dient zur Durchführung einer Korrelation in einem Mobilfunksystem. In einem ersten Verfahrensschritt wird eine Folge von Abtastwerten eines empfangenen Signals in einem Datenspeicher abgespeichert. In einem zweiten Verfahrensschritt werden Adressen zum Auslesen eines Datenworts aus dem Datenspeicher gemäß einer vorgegebenen Auslesevorschrift erzeugt. Dabei enthält das Datenwort die Abtastwerte eines Abschnitts der Folge von Abtastwerten. Die Reihenfolge der Abtastwerte innerhalb des Datenworts muss nicht die chronologische Reihenfolge sein, in welcher die Abtastwerte aufgenommen wurden. Vielmehr wird die Reihenfolge der Abtastwerte innerhalb des Datenworts durch die Reihenfolge der Abtastwerte innerhalb des Abschnitts, die Auslesevorschrift und die Organisationsstruktur des Datenspeichers bestimmt. In einem dritten Verfahrensschritt wird ein Korrelationsworts aus einer vorgegebenen Korrelationsfolge erzeugt. Das Korrelationswort geht aus den Folgengliedern eines Abschnitts der Korrelationsfolge hervor. In dem Korrelationswort werden die Folgenglieder in einer Reihenfolge angeordnet, die von dem Datenwort abhängt. In einem vierten Verfahrensschritt wird schließlich das Datenwort mit dem Korrelationswort korreliert.

Das erfindungsgemäße Verfahren weist dieselben Vorteile auf wie die erfindungsgemäße Einrichtung. Demnach lässt sich mittels des erfindungsgemäßen Verfahrens eine erhebliche Leistungseinsparung bei der Durchführung einer Korrelation in einem Mobilfunksystem erzielen.

Die Erfindung wird nachfolgend in beispielhafter Weise unter Bezugnahme auf die Zeichnungen näher erläutert. In diesen zeigen:

Fig. 1 ein schematisches Schaltbild einer Anordnung zum Auslesen eines Datenworts aus einem Datenspeicher;

Fig. 2 ein Blockschaltbild eines Ausführungsbeispiels der erfindungsgemäßen Einrichtung;

Fig. 3 eine schematische Darstellung eines Ausführungsbeispiels des erfindungsgemäßen Datenspeichers;

Fig. 4 eine schematische Darstellung des Auslesevorgangs von Datenwörtern aus dem Datenspeicher;

Fig. 5 eine schematische Darstellung des Auslesevorgangs von Datenwörtern aus dem Datenspeicher und der Erzeugung der entsprechenden Korrelationswörter durch den Codegenerator;

Fig. 6 eine schematische Darstellung des Auslesevorgangs von Datenwörtern aus einem Datenspeicher und der Erzeugung der entsprechenden Korrelationswörter gemäß einem weiteren Ausführungsbeispiel der Erfindung; und

Fig. 7 eine Architektur für den Datenspeicher und den Codegenerator.

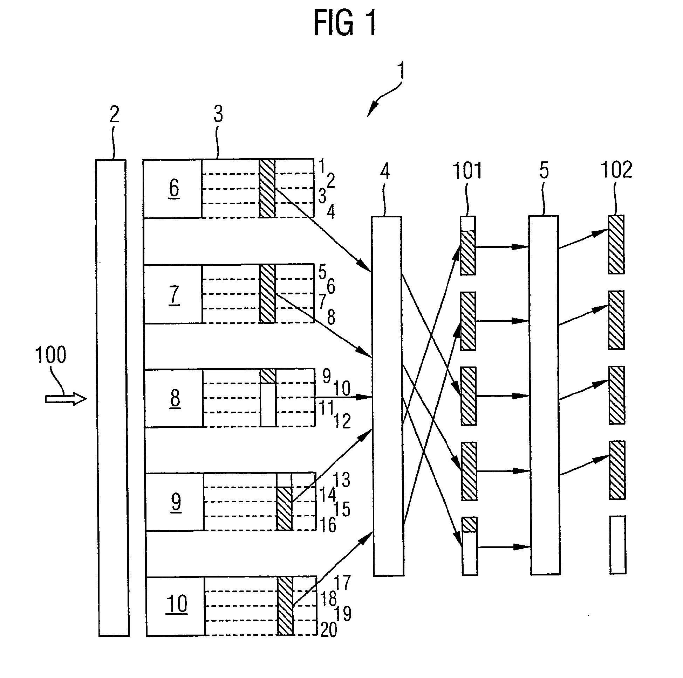

In Fig. 1 ist das schematische Schaltbild einer Anordnung 1 dargestellt, mittels welcher Abtastwerte 100 eines Empfangssignals zwischengespeichert werden können und anschließend zur Durchführung von Korrelationen vorbereitet werden können. Die Anordnung 1 umfasst einen Eingangsdatenpuffer 2, einen Datenspeicher 3, einen Multiplexer 4 und ein Schieberegister 5. Die genannten Bauelemente der Anordnung 1 sind in der angegebenen Reihenfolge hintereinander geschaltet. Der Datenspeicher 3 besteht aus fünf Speicherbänken 6, 7, 8, 9 und 10. Jede der fünf Speicherbänke 6 bis 10 weist vier Speicherzeilen auf.

Die eingehenden Abtastwerte 100 werden in den Datenspeicher 3 eingelesen, indem von dem Eingangsdatenpuffer 2 sukzessive die Speicherbänke 6 bis 10 angewählt werden. Dabei werden immer vier Abtastwerte gleichzeitig in eine der Speicherbänke 6 bis 10 geschrieben. Sobald ein Einlesedurchgang mit dem Einlesen von Abtastwerten in die Speicherbank 10 beendet wurde, wird der Einlesevorgang in der nächsten Spalte wieder von neuem begonnen, sodass die Speicherbänke 6 bis 10 erneut durchlaufen werden.

Der Multiplexer 4 liest die Abtastwerte, aus denen ein Datenwort für eine anschließende Korrelation gebildet werden soll, in einem Lesetakt aus dem Datenspeicher 3. vorliegend enthält ein solches Datenwort 16 Abtastwerte. In Fig. 1 sind beispielhaft die in dem Datenspeicher 3 abgelegten Abtastwerte, aus denen für den anstehenden Korrelationsschritt ein Datenwort gebildet werden soll, grau unterlegt dargestellt.

Zur Erzeugung des Datenworts liest der Multiplexer 4 aus jeder Speicherbank 6 bis 10 einen Block mit jeweils vier Abtastwerten aus. Dabei enthält ein Block eine Spalte einer der Speicherbänke 6 bis 10. Ferner ordnet der Multiplexer 4 die Blöcke in der Reihenfolge an, in welcher die in den Blöcken enthaltenen Abtastwerte aufgenommen wurden.

Die von dem Multiplexer 4 ausgelesenen und sortierten Blöcke 101 enthalten jedoch noch vier Abtastwerte, die nicht dem Datenwort zugewiesen werden sollen.

Durch das Schiebregister 5 werden die Abtastwerte in den Blöcken 101 um eine, zwei oder drei Stellen verschoben, sodass sich Blöcke 102 ergeben, bei denen die obersten vier Blöcke das gewünschte Datenwort enthalten und der unterste Block verworfen werden kann.

Die in der Anordnung 1 mittels des Multiplexers 4 und des Schieberegisters 5 durchgeführten Sortieroperationen beinhalten einen wesentlichen Nachteil dieser Anordnung. Im ungünstigsten Fall müssen die Daten in den Blöcken 101 um drei Abtastwerte zyklisch verschoben werden. Bei einer Wortbreite von z.B. 16 bit pro Abtastwert müssen alle Daten in den Blöcken 101, z.B. 16 * 16 bit = 256 bit, 48-mal verschoben werden. Für jede neu ausgelesene Teilsequenz muss eine solche Multiplex- und Schiebeoperation durchgeführt werden. Ferner ist eine derartige Anordnung im Hinblick auf Leistungs- und Flächenbedarf gegenüber einer erfindungsgemäßen Anordnung nachteilig.

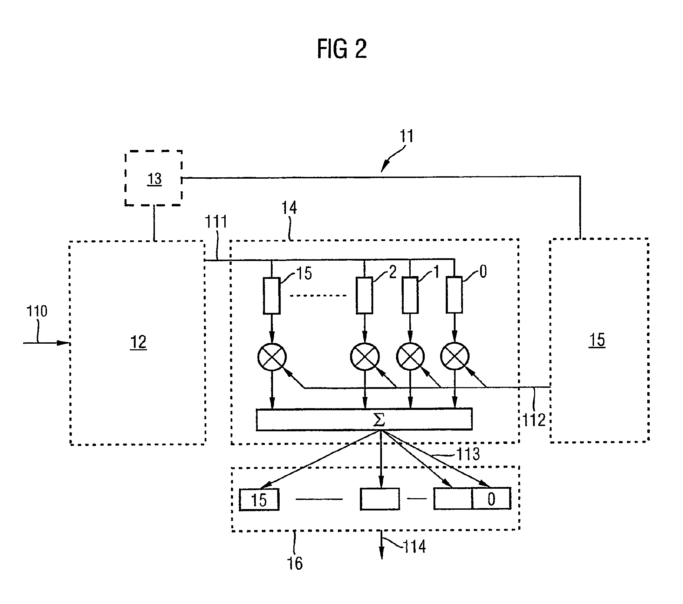

In Fig. 2 ist ein Blockschaltbild einer Korrelationseinrichtung 11 als Ausführungsbeispiel der erfindungsgemäßen Einrichtung dargestellt. Die Korrelationseinrichtung 11 umfasst einen Datenspeicher 12, einen Adressgenerator 13, ein Matched-Filter 14, einen Codegenerator 15 und einen Datenspeicher 16.

Die Korrelationseinrichtung 11 wird in dem vorliegenden Ausführungsbeispiel der Erfindung zur Synchronisation eines Mobilfunkempfängers mit einer Zeitschlitz- und/oder Rahmenstruktur eines von einer Basisstation empfangenen Funksignals eingesetzt. Dabei liegt der Datenübertragung der UMTS-Standard zugrunde.

In den Datenspeicher 12 gehen Abtastwerte 110 eines Empfangssignals ein, die dort zwischengespeichert werden. Der Adressgenerator 13 legt die Adressen der in dem Datenspeicher 12 abgelegten Abtastwerte fest, die als ein Datenwort 111 aus dem Datenspeicher 12 ausgelesen werden sollen. Das Datenwort 111 wird in das Matched-Filter 14 eingelesen und dort mit einem Korrelationswort 112 korreliert. Das Korrelationswort 112 wird von dem Codegenerator 15 aus dem Zeitschlitzsynchronisationscode pSC bzw, aus der den Rahmensynchronisationscodes sSC zugrunde liegenden Folge z gemäß obiger Gleichung (3) erzeugt. Das Matched-Filter 14 gibt als Ergebnis der Korrelation des Datenworts 110 mit dem Korrelationswort 112 einen Teilkorrelationswert 113 aus, welcher in dem Datenspeicher 16 zwischengespeichert wird. Von dem Datenspeicher 16 werden Korrelationswerte 114 ausgegeben.

Ein Datenwort 111 umfasst in dem vorliegenden Ausführungsbeispiel stets 16 Abtastwerte. Dementsprechend beträgt die Anzahl der Chips eines Korrelationsworts 112 ebenfalls 16. Es ist sinnvoll, die Korrelationen in Verarbeitungseinheiten mit jeweils 16 Abtastwerten durchzuführen, da die Grundfolgen a und b für die Zeitschlitz- bzw. Rahmensynchronisation gemäß obiger Gleichungen (2) und (4) aus jeweils 16 Folgengliedern bestehen.

Bei der Zeitschlitzsynchronisation ergibt die Akkumulation von 16 nacheinander erhaltenen Teilkorrelationswerten 113 einen Korrelationswert 114. Ein Korrelationswert 114 wird folglich aus 256 nacheinander aufgenommenen Abtastwerten erzeugt.

Bei der Rahmensynchronisation werden die 16 nacheinander erhaltenen Teilkorrelationswerte 113 einer 16-Punkt Hadamard-Transformation unterzogen. Folglich werden hier die 16 Teilkorrelationswerte 113 nicht aufsummiert, sondern der Korrelationswert 114 wird mit einer Datenbreite von 16 Teilkorrelationswerten 113 ausgegeben.

Zu beachten ist, dass im Allgemeinen das von dem Mobilfunkempfänger empfangene Signal mit der doppelten Chipfrequenz abgetastet wird. Um aussagekräftige Korrelationswerte zu erhalten, darf für eine Korrelation nur jeder zweite Abtastwert verwendet werden. Für die dazwischen liegenden Abtastwerte wird eine eigene Korrelation durchgeführt. Aus diesem Grund werden die Abtastwerte abwechselnd in verschiedene Speicherbereiche eingelesen. Man unterscheidet daher Abtastwerte mit geraden und mit ungeraden Indizes. Das Matched-Filter 14 könnte die zwei Gruppen von Abtastwerten beispielsweise auf eine zeitlich gemultiplexte Weise verarbeiten. Aus Gründen der Einfachheit wird im Folgenden jedoch nur eine Gruppe von Abtastwerten betrachtet. Es sei angenommen, dass sich die in dem Datenspeicher 12 abgelegten, aufeinander folgenden Abtastwerte um eine Chiplänge unterscheiden.

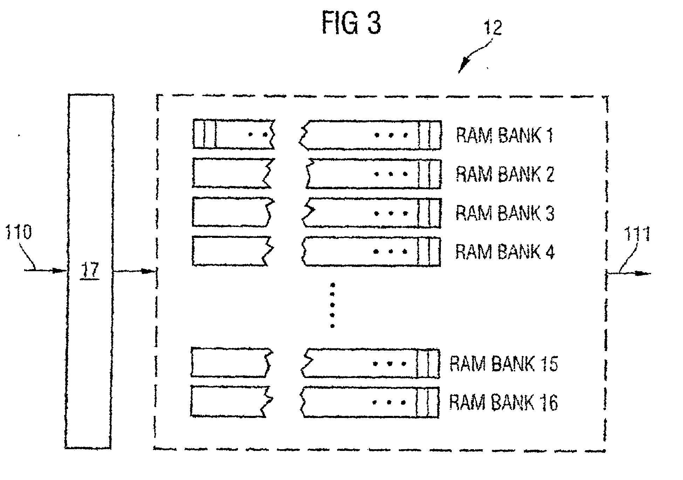

In Fig. 3 ist als Ausführungsbeispiel des erfindungsgemäßen Datenspeichers ein schematischer Aufbau des Datenspeichers 12 dargestellt. Der Datenspeicher 12 umfasst einen Eingangsdatenpuffer 17 und 16 nachgeschaltete Speicherbänke RAM BANK 1 bis 16.

In dem Eingangsdatenpuffer 17 können 16 Abtastwerte mit einer Wortbreite von jeweils 16 bit zwischengespeichert werden.

Jede der Speicherbänke RAM BANK 1 bis 16 enthält eine bestimmte Anzahl von Speicherzellen, in denen jeweils ein Abtastwert mit einer Wortbreite von 16 bit abgelegt werden kann. Vorliegend sei angenommen, dass die Speicherbänke RAM BANK 1 bis 16 jeweils 16 Speicherzellen enthalten.

Die in den Datenspeicher 12 eingehenden Abtastwerte 110 werden zunächst in dem Eingangsdatenpuffer 17 zwischengespeichert und anschließend auf die Speicherbänke RAM BANK 1 bis 16 verteilt. Dabei wird der erste Abtastwert in die äußere rechte Speicherzelle der Speicherbank RAM BANK 1 geschrieben. Anschließend wird der zweite Abtastwert in die darunter liegende Speicherzelle der Speicherbank RAM BANK 2 geschrieben. Sobald die erste Spalte der Speicherbänke RAM BANK 1 bis 16 aufgefüllt ist, wird die zweite Spalte beginnend mit der Speicherbank RAM BANK 1 aufgefüllt. Dieses Verfahren wird entsprechend fortgesetzt.

Bei dem Datenspeicher 12 handelt es sich vorliegend um einen Ringdatenpuffer, was bedeutet, dass, sobald alle Speicherzellen mit Abtastwerten aufgefüllt sind, wieder von vorne begonnen wird, die Speicherzellen der Speicherbänke RAM BANK 1 bis 16 mit neuen Abtastwerten aufzufüllen, und somit die alten Abtastwerte überschrieben werden.

Ausgangsseitig wird von dem Datenspeicher 12 das Datenwort 111 ausgegeben.

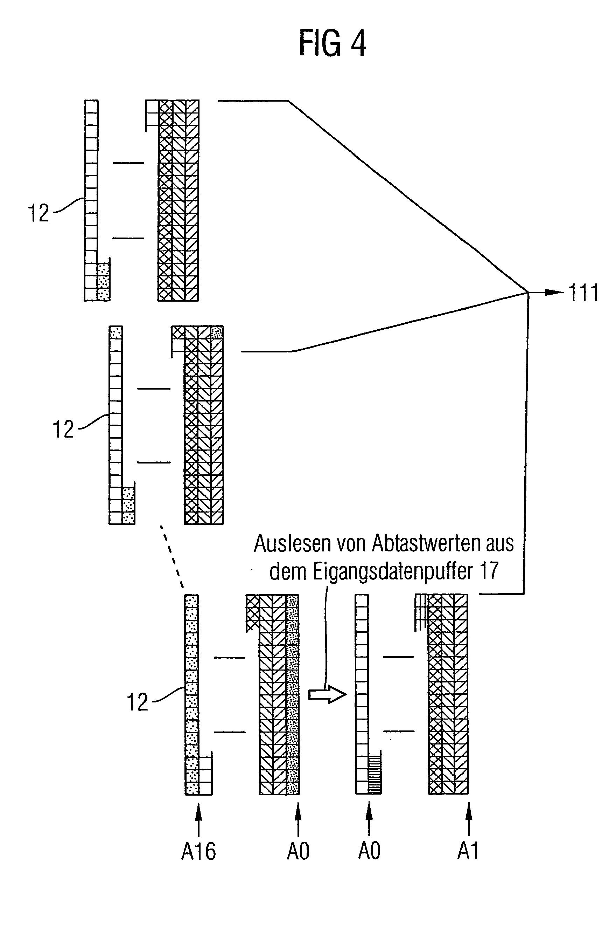

In Fig. 4 ist schematisch und exemplarisch das sukzessive Auslesen von Datenwörtern 111 aus dem Datenspeicher 12 dargestellt.

In den drei in Fig. 4 gezeigten Darstellungen des Datenspeichers 12 sind jeweils die 16 Abtastwerte, aus denen jeweils ein Datenwort 111 gebildet werden soll, mit demselben Muster gekennzeichnet. Schwarz hinterlegte Felder enthalten bereits abgearbeitete Daten, die nicht mehr benötigt werden. Weiß hinterlegte Felder ohne zusätzliches Muster können mit neuen Daten aus dem Eingangsdatenpuffer 17 überschrieben werden.

In der obersten Darstellung von Fig. 4 bilden die Abtastwerte der ersten, d.h. der rechten Spalte des Datenspeichers 12 ein Datenwort 111. Dieses Datenwort 111 wird in das Matched-Filter 14 gelesen und dort mit einem Korrelationswort 112 korreliert. Anschließend werden die Abtastwerte der zweiten Spalte des Datenspeichers 12 als ein Datenwort 111 ausgelesen und korreliert. Dieses Verfahren wird solange fortgesetzt, bis 16 Datenwörter 111, d.h. 256 Abtastwerte, ausgelesen wurden und in dem Datenspeicher 16 ein erster Korrelationswert 114 erzeugt werden kann. Danach ist der erste Korrelationsdurchgang abgeschlossen.

Im Anschluss an das Auslesen des 16. Datenworts 111 des ersten Korrelationsdurchgangs wird wieder ein Datenwort 111 aus der ersten Spalte des Datenspeichers 12 ausgelesen. Dieses Datenwort 111 ist jedoch im Vergleich zu dem ersten Datenwort 111 des ersten Korrelationsdurchgangs um einen Abtastwert verschoben, sodass zu diesem Datenwort 111 auch der Abtastwert aus der zweiten Spalte der Speicherbank RAM BANK 1 gehört. Entsprechend werden die weiteren Datenwörter 111 des zweiten Korrelationsdurchgangs aus dem Datenspeicher 12 ausgelesen. Dieser Korrelationsdurchgang ist in der mittleren Darstellung von Fig. 4 gezeigt. Als Ergebnis liefert der zweite Korrelationsdurchgang einen zweiten Korrelationswert 114.

Das beschriebene Verfahren wird entsprechend fortgesetzt.

In der untersten Darstellung von Fig. 4 ist der 17. Korrelationsdurchgang gezeigt. Hierbei wurde das in dem Korrelationsdurchgang als erstes auszulesende Datenwort 111 so weit verschoben, dass es sich komplett in der zweiten Spalte des Datenspeichers 12 befindet. Da die Abtastwerte der ersten Spalte des Datenspeichers 12 nun nicht mehr benötigt werden, können sie mit neuen Abtastwerten aus dem Eingangsdatenpuffer 17 überschrieben werden.

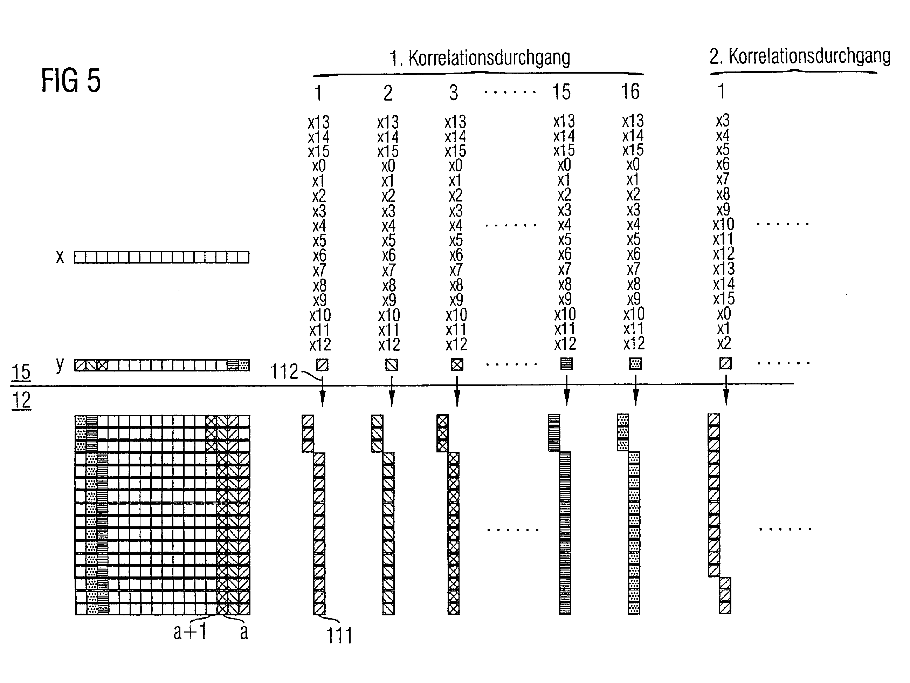

In Fig. 5 ist gezeigt, wie die Datenwörter 111 aus dem Datenspeicher 12 ausgelesen werden und wie die entsprechenden Korrelationswörter 112 von dem Codegenerator 15 erzeugt werden.

In der unteren Hälfte von Fig. 5 ist der Datenspeicher 12 dargestellt. Abtastwerte, die jeweils ein Datenwort 111 bilden sollen, sind wieder mit demselben Muster gekennzeichnet. Es sind 16 Datenwörter 111 gezeigt, die in einem ersten Korrelationsdurchgang ausgelesen werden. Für den nachfolgenden zweiten Korrelationsdurchgang ist das erste Datenwort 111 dargestellt.

In dem ersten Korrelationsdurchgang erstrecken sich die Abtastwerte, die jeweils ein Datenwort 111 bilden sollen, stets von einer Speicherzelle der Speicherbank RAM BANK 4 bis zu der Speicherzelle der Speicherbank RAM BANK 3 in der darauf folgenden Spalte. Anschaulich lässt sich dies durch einen Offset von 3 für den ersten Korrelationsdurchgang beschreiben.

Die Abtastwerte werden in dem Datenwort 111 nicht in der chronologischen Reihenfolge angeordnet, in der sie in den Datenspeicher 12 eingelesen wurden. Ihre Anordnung in dem Datenwort 111 lässt sich durch eine Projektion der Abtastwerte aus dem Datenspeicher 12 auf eine vertikale Achse veranschaulichen. Für das vorliegende Beispiel bedeutet dies, dass das Datenwort 111 angeführt wird von den drei Abtastwerten, die sich in der Spalte mit der Spaltenadresse a+1 des Datenspeichers 12 befanden, und dass erst danach die 13 Abtastwerte der Spalte mit der Spaltenadresse a angeordnet sind.

Dabei ist zu beachten, dass ein Datenwort 111 in einem Leseschritt aus dem Datenspeicher 12 ausgelesen wird.

Da die Abtastwerte in dem Datenwort 111 nicht in ihrer chronologischen Reihenfolge angeordnet sind, muss das Korrelationswort 112 der Anordnung des Datenworts 111 angepasst werden. Im Ergebnis müssen der Offset des Korrelationsworts 112 und der Offset des Datenworts 111 übereinstimmen. Vorliegend bedeutet dies, dass die Grundfolge a bzw. b durch den Codegenerator 15 entsprechend umsortiert werden muss. Die Arbeitsweise des Codegenerators 15 ist in der oberen Hälfte von Fig. 5 dargestellt. Stellvertretend für die Grundfolgen a und b ist hier eine Grundfolge x dargestellt, welche aus 16 Folgengliedern [x0, x1, ..., x15] besteht.

Die Grundfolge x wird in dem ersten Korrelationsdurchgang entsprechend der Anordnung der Abtastwerte in dem Datenwort 111 umgestellt. Dies kann beispielsweise mit Hilfe eines Schieberegisters realisiert werden. Als Ergebnis erhält man für den ersten Korrelationsdurchgang eine Grundfolge [x13, x14, x15, x0, x1, ..., x12].

Für eine Zeitschlitz- bzw. Rahmensynchronisation muss die Grundfolge noch mit den Vorzeichenfolgen aus obigen Gleichungen (1) oder (3) multipliziert werden. Stellvertretend für diese Vorzeichenfolgen ist in Fig. 5 eine Komplementärfolge y dargestellt, die in ihren 16 Folgengliedern die jeweiligen Vorzeichen enthält. Zur Erzeugung eines Teilkorrelationswerts 113 wird die umgestellte Grundfolge x mit dem entsprechenden Vorzeichen der Komplementärfolge y multipliziert und anschließend wird eine Korrelation mit dem entsprechenden Datenwort 111 durchgeführt.

In Fig. 5 ist ferner der Beginn eines zweiten Korrelationsdurchgangs gezeigt. Hier beträgt der Offset 13. Folglich nimmt die Grundfolge x die Form [x3, x4, ..., x15, x0, x1, x2] an.

Das in Fig. 5 gezeigte Vorgehen ist insofern vorteilhaft, als dass die Abtastwerte in dem Datenspeicher 12 vor Beginn eines neuen Korrelationsdurchgangs nicht umsortiert werden müssen. Es muss lediglich die Grundfolge x mittels des Schieberegisters der Reihenfolge der Abtastwerte in dem Datenwort 111 angepasst werden. Dies bedeutet für das vorliegende Ausführungsbeispiel, dass bei einer Wortbreite des Korrelationsworts 112 von 16 bit lediglich eine maximale zyklische Verschiebung der Grundfolge x um 15 bit durchzuführen ist. Multiplexoperationen sind nicht erforderlich. Die Grundfolge x bleibt während eines Korrelationsdurchgangs konstant. Vorteilhaft ist dabei, dass eine wesentlich geringere Anzahl von Bit-Verschiebeoperationen im Vergleich zur Anordnung 1 aus Fig. 1 notwendig sind, was eine geringere Leistungsaufnahme zur Folge hat.

Das erfindungsgemäße Vorgehen kann auch auf den in Fig. 1 gezeigten Datenspeicher 3 angewendet werden. Anstelle der Umsortierung der Abtastwerte durch den Multiplexer 4 und das Schieberegister 5 werden die Abtastwerte in dem Datenwort dann in der Reihenfolge angeordnet, wie sie sich aus einer Projektion auf eine vertikale Achse ergeben würde. In die entsprechend umsortierte Grundfolge x müssen für die Abtastwerte, die nicht zu dem gewünschten Datenwort gehören, Nullen eingefügt werden.

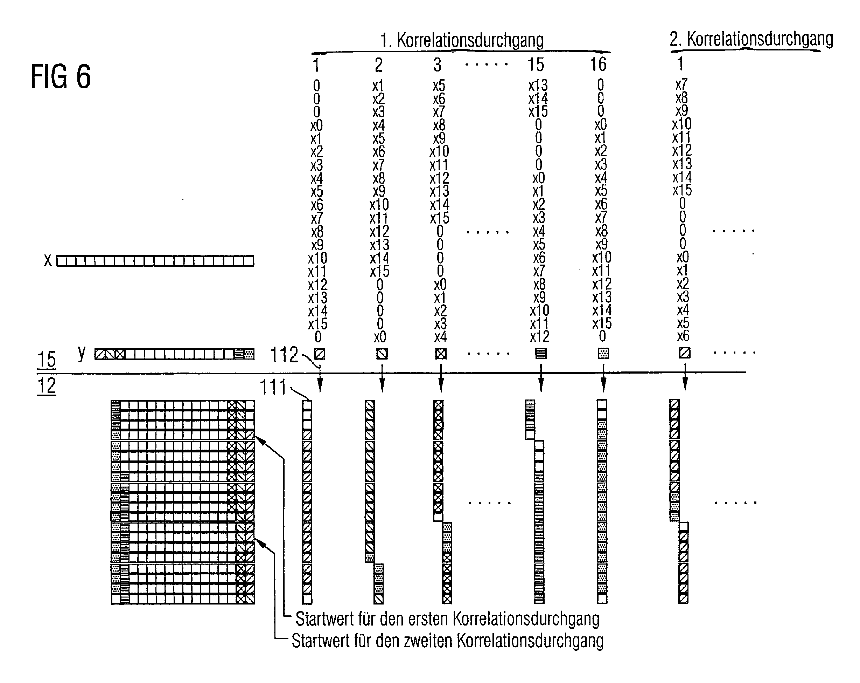

Ein derartiges Vorgehen ist in Fig. 6 gezeigt. Die Darstellungen von Fig. 6 sind weitgehend analog zu denen von Fig. 5, jedoch umfasst der Datenspeicher 12 in Fig. 6 fünf Speicherbänke, welche jeweils vier Speicherzeilen aufweisen. Ferner geht aus Fig. 6 hervor, dass die Grundfolge x bei dem vorliegenden Ausführungsbeispiel während eines Korrelationsdurchgangs nicht mehr konstant ist, sondern für jede Teilkorrelation umsortiert werden muss. Außerdem werden in die Grundfolge x an den entsprechenden Stellen Nullen eingefügt. Das in Fig. 6 skizzierte Vorgehen ist vorteilhaft gegenüber der Verarbeitungsweise der Anordnung 1 aus Fig. 1, da keine Multiplexoperationen notwendig sind. Bei der vorliegenden Wortbreite des Korrelationsworts 112 von 20 bit ist pro Teilkorrelation lediglich eine maximale zyklische Verschiebung von 19 bit notwendig.

Aus den in den Fig. 5 und 6 gezeigten Ausführungsbeispielen der Erfindung wird ersichtlich, dass sich das erfindungsgemäße Vorgehen auf verschiedene Organisationsstrukturen des Datenspeichers 12 anwenden lässt. Dabei können die Anzahl der Speicherbänke und die Anzahl der Speicherzeilen einer Speicherbank beliebig variiert werden. Bei der Anordnung der Grundfolge x für die Erzeugung der Teilkorrelationswerte muss die jeweilige Organisationsstruktur des Datenspeichers 12 beachtet werden. Ferner ist die Auslesevorschrift zu beachten, die beispielsweise bei einer Zeitschlitz- und/oder Rahmensynchronisation vorgibt, welche Abtastwerte in welchem Schritt eines Korrelationsdurchgangs verarbeitet werden.

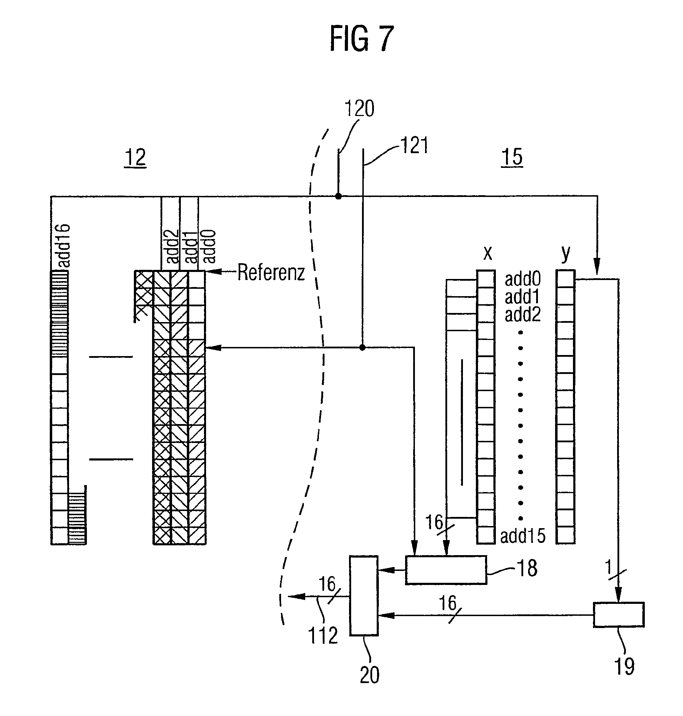

In Fig. 7 ist eine beispielhafte Architektur für den Datenspeicher 12 und den Codegenerator 15 dargestellt. Beide Bauelemente sind in Fig. 7 graphisch durch eine gestrichelte Linie getrennt.

Die in Fig. 7 gezeigte Architektur eignet sich für die Ausführung des in den Fig. 3 bis 5 gezeigten Ausführungsbeispiels. Die Architektur kann durch leichte Modifikationen auch für die Ausführung des in Fig. 6 gezeigten Ausführungsbeispiels ausgelegt werden.

Sowohl der Datenspeicher 12 als auch der Codegenerator 15 werden von Kontrollsignalen 120 und 121 gespeist. Durch das Kontrollsignal 120 wird die Spalte des Datenspeichers 12 ausgewählt, in welcher der chronologisch erste Abtastwert des zu bildenden Datenworts 111 zu finden ist. Ferner gibt das Kontrollsignal 120 das Folgenglied der Komplementärfolge y an, das für die Bildung des Korrelationsworts 112 auszuwählen ist. Das Kontrollsignal 121 gibt den Offset an. Vorliegend beträgt der Offset 5.

Das Kontrollsignal 121 speist eine Adresslogik 18, die anhand dieser Informationen die Grundfolge x um den benötigten Versatz zyklisch verschoben zur Verfügung stellt.. Das durch das Kontrollsignal 120 ausgewählte Folgenglied der Komplementärfolge y wird an einen 1-zu-16-bit-Konvertierer 19 weitergeleitet, welcher das 1 bit-Vorzeichen in ein 16 bit-Wort konvertiert. Dies ist notwendig, damit anschließend das Vorzeichen aus der Komplementärfolge y mit der umsortierten Grundfolge x mittels eines Multiplizierers 20 bitweise multipliziert werden kann. Ausgangsseitig gibt der Multiplizierer 20 das Korrelationswort 112 aus.

## Patentansprüche

**1.** Einrichtung (11) zur Durchführung einer Korrelation in einem Mobilfunksystem, mit

- einem Datenspeicher (12) zum Speichern einer Folge von Abtastwerten (110) eines empfangenen Signals,
- einem Adressgenerator (13) zur Erzeugung von Adressen zum Auslesen eines Datenworts (111) aus dem Datenspeicher (12) gemäß einer vorgegebenen Auslesevorschrift, wobei das Datenwort (111) die Abtastwerte eines Abschnitts der Folge von Abtastwerten (110) enthält und die Reihenfolge der Abtastwerte innerhalb des Datenworts (111) durch die Reihenfolge der Abtastwerte innerhalb des Abschnitts, die Auslesevorschrift und die Organisationsstruktur des Datenspeichers (12) bestimmt ist,
- einem Codegenerator (15) zur Erzeugung eines Korrelationsworts (112) aus einer vorgegebenen Korrelationsfolge, wobei das Korrelationswort (112) aus den Folgengliedern eines Abschnitts der Korrelationsfolge erzeugt wird und in dem Korrelationswort (112) die Folgenglieder in einer Reihenfolge, die von dem Datenwort (111) abhängt, angeordnet sind, und
- einer Korrelatoreinheit (14) zur Korrelation des Datenworts (111) mit dem Korrelationswort (112).

**2.** Einrichtung (11) nach Anspruch 1,
**dadurch gekennzeichnet,**

- **dass** der Datenspeicher (12) M separat adressierbare Unterspeicher (RAM BANK 1, ..., RAM BANK 16) aufweist.

**3.** Einrichtung (11) nach Anspruch 2,
**dadurch gekennzeichnet,**

- **dass** die Unterspeicher (RAM BANK 1, ..., RAM BANK 16) zur Speicherung der Abtastwerte fortlaufend und zyklisch durchlaufen werden,
- **dass** dabei jeweils N nacheinander aufgenommene Abtastwerte in einem Unterspeicher (RAM BANK 1, ..., RAM BANK 16) gespeichert werden, und
- **dass** insbesondere N = 1 ist.

**4.** Einrichtung (11) nach einem oder mehreren der vorhergehenden Ansprüche,
**dadurch gekennzeichnet,**

- **dass** der Korrelationsfolge eine Grundfolge (x) zugrunde liegt.

**5.** Einrichtung (11) nach Anspruch 4,
**dadurch gekennzeichnet,**

- **dass** zur Erzeugung des Korrelationsworts (112) die Grundfolge (x) beginnend bei einem Folgenglied zyklisch durchlaufen wird.

**6.** Einrichtung (11) nach einem oder mehreren der Ansprüche 2 bis 5,
**dadurch gekennzeichnet,**

- **dass** das Datenwort (111) M Abtastwerte aufweist,
- **dass** die Grundfolge (x) M Folgenglieder aufweist, und
- **dass** der Adressgenerator (13) genau einen Abtastwert aus jedem Unterspeicher (RAM BANK 1, ..., RAM BANK 16) dem Datenwort (111) zuordnet.

**7.** Einrichtung (11) nach Anspruch 6,
**dadurch gekennzeichnet,**

- **dass** die Unterspeicher (RAM BANK 1, ..., RAM BANK 16) gedanklich von 1 bis M durchnummeriert sind,
- **dass** die Abtastwerte in dem Datenwort (111) jeweils einer Datenwort-Untereinheit zugeordnet sind, wobei die Datenwort-Untereinheiten gedanklich von 1 bis M durchnummeriert sind,
- **dass** der Adressgenerator (13) zum Auslesen des Datenworts (111) gemäß der Auslesevorschrift eine Startadresse X vorgibt, wobei die Startadresse X einen Unterspeicher (RAM BANK 1, ..., RAM BANK 16) bezeichnet,
- **dass** den Datenwort-Untereinheiten X bis M Abtastwerte der Unterspeicher X bis M (RAM BANK 1, ..., RAM BANK 16) zugewiesen werden,
- **dass** den Datenwort-Untereinheiten 1 bis X-1 Abtastwerte der Unterspeicher 1 bis X-1 (RAM BANK 1, ..., RAM BANK 16) zugewiesen werden, und
- **dass** die den Datenwort-Untereinheiten X, ..., M, 1, ..., X-1 zugewiesenen Abtastwerte in der angegebenen Reihenfolge zeitlich nacheinander aufgenommen wurden.

**8.** Einrichtung (11) nach Anspruch 7,
**dadurch gekennzeichnet,**

- **dass** die Folgenglieder der Grundfolge (x) gedanklich von 1 bis M durchnummeriert sind,
- **dass** die Folgenglieder in dem Korrelationswort (112) jeweils einer Korrelationswort-Untereinheit zugeordnet sind, wobei die Korrelationswort-Untereinheiten gedanklich von 1 bis M durchnummeriert sind,
- **dass** die Werte für die Korrelationswort-Untereinheiten X bis M aus den Folgengliedern 1 bis M-(X-1) der Grundfolge (x) erzeugt werden, und
- **dass** die Werte für die Korrelationswort-Untereinheiten 1 bis X-1 aus den Folgengliedern M-(X-1)+1 bis M der Grundfolge (x) erzeugt werden.

**9.** Einrichtung (11) nach einem oder mehreren der Ansprüche 4 bis 8,
**dadurch gekennzeichnet,**

- **dass** sich die Korrelationsfolge zusammensetzt aus einer Hintereinanderreihung von Grundfolgen (x), wobei die Grundfolgen (x) jeweils mit einem Vorzeichen beaufschlagt sind, das durch eine Komplementärfolge (y) vorgegeben ist.

**10.** Einrichtung (11) nach Anspruch 9,
**dadurch gekennzeichnet,**

- **dass** der Abschnitt der Korrelationsfolge, der zur Erzeugung des Korrelationsworts (112) verwendet wird, eine der Vorzeichen-behafteten Grundfolgen (x) der Korrelationsfolge ist.

**11.** Einrichtung (11) nach einem oder mehreren der vorhergehenden Ansprüche,
**dadurch gekennzeichnet,**

- **dass** gemäß der Auslesevorschrift die Abtastwerte des Datenworts (111) in einem Ausleseschritt aus dem Datenspeicher (12) ausgelesen werden.

**12.** Einrichtung (11) nach einem oder mehreren der vorhergehenden Ansprüche,
**dadurch gekennzeichnet,**

- **dass** der Datenspeicher (12) ein Ringdatenpuffer ist.

**13.** Verwendung der Einrichtung (11) nach einem oder mehreren der vorhergehenden Ansprüche für die Synchronisation eines Mobilfunkempfängers mit einer Zeitschlitzstruktur und insbesondere einer Rahmenstruktur eines von einer Basisstation empfangenen Funksignals, wobei das Mobilfunksystem insbesondere auf dem UMTS-Standard basiert.

**14.** Verfahren zur Durchführung einer Korrelation in einem Mobilfunksystem, mit folgenden Verfahrensschritten:

(a) Speichern einer Folge von Abtastwerten (110) eines empfangenen Signals in einem Datenspeicher (12);
(b) Erzeugen von Adressen zum Auslesen eines Datenworts (111) aus dem Datenspeicher (12) gemäß einer vorgegebenen Auslesevorschrift, wobei das Datenwort (111) die Abtastwerte eines Abschnitts der Folge von Abtastwerten (110) enthält und die Reihenfolge der Abtastwerte innerhalb des Datenworts (111) durch die Reihenfolge der Abtastwerte innerhalb des Abschnitts, die Auslesevorschrift und die Organisationsstruktur des Datenspeichers (12) bestimmt wird;
(c) Erzeugen eines Korrelationsworts (112) aus einer vorgegebenen Korrelationsfolge, wobei das Korrelationswort (112) aus den Folgengliedern eines Abschnitts der Korrelationsfolge erzeugt wird und in dem Korrelationswort (112) die Folgenglieder in einer Reihenfolge, die von dem Datenwort (111) abhängt, angeordnet werden; und
(d) Korrelieren des Datenworts (111) mit dem Korrelationswort (112).

**15.** Verfahren nach Anspruch 14,
**dadurch gekennzeichnet,**

- **dass** der Datenspeicher (12) M separat adressierbare Unterspeicher (RAM BANK 1, ..., RAM BANK 16) aufweist.

**16.** Verfahren nach Anspruch 15,
**dadurch gekennzeichnet,**

- **dass** die Unterspeicher (RAM BANK 1, ..., RAM BANK 16) zur Speicherung der Abtastwerte fortlaufend und zyklisch durchlaufen werden,
- **dass** dabei jeweils N nacheinander aufgenommene Abtastwerte in einem Unterspeicher (RAM BANK 1, ..., RAM BANK 16) gespeichert werden, und
- **dass** insbesondere N = 1 ist.

**17.** Verfahren nach einem oder mehreren der Ansprüche 14 bis 16,
**dadurch gekennzeichnet,**

- **dass** der Korrelationsfolge eine Grundfolge (x) zugrunde liegt.

**18.** Verfahren nach Anspruch 17,
**dadurch gekennzeichnet,**

- **dass** zum Erzeugen des Korrelationsworts (112) die Grundfolge (x) beginnend bei einem Folgenglied zyklisch durchlaufen wird.

**19.** Verfahren nach einem oder mehreren der Ansprüche 15 bis 18,
**dadurch gekennzeichnet,**

- **dass** das Datenwort (111) M Abtastwerte aufweist,
- **dass** die Grundfolge (x) M Folgenglieder aufweist, und
- **dass** dem Datenwort (111) aus jedem Unterspeicher (RAM BANK 1, ..., RAM BANK 16) genau ein Abtastwert zugeordnet wird.

**20.** Verfahren nach Anspruch 19,

**dadurch gekennzeichnet,**

- **dass** die Unterspeicher (RAM BANK 1, ..., RAM BANK 16) gedanklich von 1 bis M durchnummeriert sind,
- **dass** die Abtastwerte in dem Datenwort (111) jeweils einer Datenwort-Untereinheit zugeordnet sind, wobei die Datenwort-Untereinheiten gedanklich von 1 bis M durchnummeriert sind,
- **dass** zum Auslesen des Datenworts (111) gemäß der Auslesevorschrift eine Startadresse X vorgegeben wird, wobei die Startadresse X einen Unterspeicher (RAM BANK 1, ..., RAM BANK 16) bezeichnet,
- **dass** den Datenwort-Untereinheiten X bis M Abtastwerte der Unterspeicher X bis M (RAM BANK 1, ..., RAM BANK 16) zugewiesen werden,
- **dass** den Datenwort-Untereinheiten 1 bis X-1 Abtastwerte der Unterspeicher 1 bis X-1 (RAM BANK 1, ..., RAM BANK 16) zugewiesen werden, und
- **dass** die den Datenwort-Untereinheiten X, ..., M, 1, ..., X-1 zugewiesenen Abtastwerte in der angegebenen Reihenfolge zeitlich nacheinander aufgenommen wurden.

**21.** Verfahren nach Anspruch 20,
**dadurch gekennzeichnet,**

- **dass** die Folgenglieder der Grundfolge (x) gedanklich von 1 bis M durchnummeriert sind,
- **dass** die Folgenglieder in dem Korrelationswort (112) jeweils einer Korrelationswort-Untereinheit zugeordnet sind, wobei die Korrelationswort-Untereinheiten gedanklich von 1 bis M durchnummeriert sind,
- **dass** die Werte für die Korrelationswort-Untereinheiten X bis M aus den Folgengliedern 1 bis M-(X-1) der Grundfolge (x) erzeugt werden, und
- **dass** die Werte für die Korrelationswort-Untereinheiten 1 bis X-1 aus den Folgengliedern M-(X-1)+1 bis M der Grundfolge (x) erzeugt werden.

**22.** Verfahren nach einem oder mehreren der Ansprüche 17 bis 21,
**dadurch gekennzeichnet,**

- **dass** sich die Korrelationsfolge zusammensetzt aus einer Hintereinanderreihung von Grundfolgen (x), wobei die Grundfolgen (x) jeweils mit einem Vorzeichen beaufschlagt sind, das durch eine Komplementärfolge (y) vorgegeben ist.

**23.** Verfahren nach Anspruch 22,
**dadurch gekennzeichnet,**

- **dass** der Abschnitt der Korrelationsfolge, der zur Erzeugung des Korrelationsworts (112) verwendet wird, eine der Vorzeichen-behafteten Grundfolgen (x) der Korrelationsfolge ist.

**24.** Verfahren nach einem oder mehreren der Ansprüche 14 bis 23,
**dadurch gekennzeichnet,**

- **dass** gemäß der Auslesevorschrift die Abtastwerte des Datenworts (111) in einem Ausleseschritt aus dem Datenspeicher (12) ausgelesen werden.

**25.** Verfahren nach einem oder mehreren der Ansprüche 14 bis 24,
**dadurch gekennzeichnet,**

- **dass** der Datenspeicher (12) ein Ringdatenpuffer ist.

**26.** Verfahren zur Synchronisation eines Mobilfunkempfängers mit einer Zeitschlitzstruktur und insbesondere einer Rahmenstruktur eines von einer Basisstation empfangenen Funksignals, wobei das Mobilfunksystem insbesondere auf dem UMTS-Standard basiert, mit einem Verfahren nach einem oder mehreren der Ansprüche 14 bis 25.

## Claims

**1.** Device (11) for carrying out a correlation in a mobile radio system, having

- a data memory (12) for storage of a sequence of sample values (110) of a received signal,
- an address generator (13) for production of addresses for reading a data word (111) from the data memory (12) in accordance with a predetermined reading rule, with the data word (111) containing the sample values of a section of the sequence of sample values (110), and with the sequence of the sample values within the data word (111) being determined by the sequence of the sample values within the section, the reading rule and the organization structure of the data memory (12),
- a code generator (15) for production of a correlation word (112) from a predetermined correlation sequence, with the correlation word (112) being produced from the sequence elements of a section of the correlation sequence, and with the sequence elements being arranged in the correlation word (112) in a sequence which depends on the data word (111), and
- a correlator unit (14) for correlation of the data word (111) with the correlation word (112).

2. Device (11) according to Claim 1, **characterized**

- **in that** the data memory (12) has M separately addressable sub-memories (RAM BANK 1, ..., RAM BANK 16).

3. Device (11) according to Claim 2, **characterized**

- **in that** the sub-memories (RAM BANK 1, ..., RAM BANK 16) are passed through continuously and cyclically for storage of the sample values,
- **in that**, in this instance, in each case N successively recorded sample values are stored in a sub-memory (RAM BANK 1, ..., RAM BANK 16) and
- **in that**, in particular, N = 1.

4. Device (11) according to one or more of the preceding claims, **characterized**

- **in that** the correlation sequence is based on a basic sequence (x).

5. Device (11) according to Claim 4,
**characterized**

- **in that**, in order to produce the correlation word (112) the basic sequence (x) is passed through cyclically, starting with one sequence element.

6. Device (11) according to one or more of Claims 2 to 5,
**characterized**

- **in that** the data word (111) has M sample values,
- **in that** the basic sequence (x) has M sequence elements, and
- **in that** the address generator (13) associates one, and only one, sample value from each sub-memory (RAM BANK 1, ..., RAM BANK 16) with the data word (111).

7. Device (11) according to Claim 6,
**characterized**

- **in that** the sub-memories (RAM BANK 1, ..., RAM BANK 16) are numbered successively in an imaginary form from 1 to M,
- **in that** the sample values in the data word (111) are each associated with a data-word sub-unit, with the data-word sub-units being numbered successively in an imaginary form from 1 to M,
- **in that** the address generator (13) presets a start address X for reading the data word (111) in accordance with the reading rule, with the start address X denoting a sub-memory (RAM BANK 1, ..., RAM BANK 16),
- **in that** the data-word sub-units are assigned X to M sample values from the sub-memories X to M (RAM BANK 1, ..., RAM BANK 16),
- **in that** the data-word sub-units are assigned 1 to X-1 sample values from the sub-memories 1 to X-1 (RAM BANK 1, ..., RAM BANK 16), and
- **in that** the sample values which are assigned to the data-word sub-units X, ..., M, 1, ..., X-1 were recorded successively in time in the stated sequence.

**8.** Device (11) according to Claim 7, **characterized**

- **in that** the sequence elements of the basic sequence (x) are numbered successively in an imaginary form from 1 to M,
- **in that** the sequence elements in the correlation word (112) are each associated with one correlation-word sub-unit, with the correlation-word sub-units being numbered successively in an imaginary form from 1 to M,
- **in that** the values for the correlation-word sub-units X to M are produced from the sequence elements 1 to M-(X-1) in the basic sequence (x), and
- **in that** the values for the correlation-word sub-units 1 to X-1 are produced from the sequence elements M-(X-1)+1 to M in the basic sequence (x).

**9.** Device (11) according to one or more of Claims 4 to 8, **characterized in that** the correlation sequence comprises basic sequences (x) arranged one behind the other, with the basic sequences (x) each having a mathematical sign applied to them, which is predetermined by a complementary sequence (y).

**10.** Device (11) according to Claim 9,
**characterized**

- **in that** the section of the correlation sequence which is used for production of the correlation word (112) is one of the basic sequences (x) to which mathematical signs have been applied in the correlation sequence.

**11.** Device (11) according to one or more of the preceding claims, **characterized**

- **in that** the sample values of the data word (111) are read from the data memory (12) in a reading step, in accordance with the reading rule.

**12.** Device (11) according to one or more of the preceding claims, **characterized**

- **in that** the data memory (12) is a ring data buffer.

**13.** Use of the device (11) according to one or more of the preceding claims for synchronization of a mobile radio receiver with a time-slot structure, and in particular a frame structure of a radio signal received from a base station, with the mobile radio system being based in particular on the UMTS Standard.

**14.** Method for carrying out a correlation in a mobile radio system, having the following method steps:

(a) storage of a sequence of sample values (110) of a received signal in a data memory (12);
(b) production of addresses for reading a data word (111) from the data memory (12) in accordance with a predetermined reading rule, with the data word (111) containing the sample values of a section of the sequence of sample values (110), and with the sequence of the sample values within the data word (111) being determined by the sequence of the sample values within the section, the reading rule and the organization structure of the data memory (12);
(c) production of a correlation word (112) from a predetermined correlation sequence, with the correlation word (112) being produced from the sequence elements of a section of the correlation sequence, and with the sequence elements being arranged in the correlation word (112) in a sequence which depends on the data word (111); and
(d) correlation of the data word (111) with the correlation word (112).

**15.** Method according to Claim 14, **characterized**

- **in that** the data memory (12) has M separately addressable sub-memories (RAM BANK 1, ..., RAM BANK 16).

**16.** Method according to Claim 15, **characterized**

- **in that** the sub-memories (RAM BANK 1, ..., RAM BANK 16) are passed through continuously and cyclically for storage of the sample values,
- **in that**, in this instance, in each case N successively recorded sample values are stored in a sub-memory (RAM BANK 1, ..., RAM BANK 16) and

- **in that**, in particular, N = 1.

**17.** Method according to one or more of Claims 14 to 16, **characterized**

- **in that** the correlation sequence is based on a basic sequence (x).

**18.** Method according to Claim 17, **characterized**

- **in that**, in order to produce the correlation word (112) the basic sequence (x) is passed through cyclically, starting with one sequence element.

**19.** Method according to one or more of Claims 15 to 18, **characterized**

- **in that** the data word (111) has M sample values,
- **in that** the basic sequence (x) has M sequence elements, and
- **in that** one, and only one, sample value from each sub-memory (RAM BANK 1, ..., RAM BANK 16) is associated with the data word (111).

**20.** Method according to Claim 19, **characterized**

- **in that** the sub-memories (RAM BANK 1, ..., RAM BANK 16) are numbered successively in an imaginary form from 1 to M,
- **in that** the sample values in the data word (111) are each associated with a data-word sub-unit, with the data-word sub-units being numbered successively in an imaginary form from 1 to M,
- **in that** a start address X is preset for reading the data word (111) in accordance with the reading rule, with the start address X denoting a sub-memory (RAM BANK 1, ..., RAM BANK 16),
- **in that** the data-word sub-units are assigned X to M sample values from the sub-memories X to M (RAM BANK 1, ..., RAM BANK 16),
- **in that** the data-word sub-units are assigned 1 to X-1 sample values from the sub-memories 1 to X-1 (RAM BANK 1, ..., RAM BANK 16), and
- **in that** the sample values which are assigned to the data-word sub-units X, ..., M, 1, ..., X-1 were recorded successively in time in the stated sequence.

**21.** Method according to Claim 20, **characterized**

- **in that** the sequence elements of the basic sequence (x) are numbered successively in an imaginary form from 1 to M,
- **in that** the sequence elements in the correlation word (112) are each associated with one correlation-word sub-unit, with the correlation-word sub-units being numbered successively in an imaginary form from 1 to M,
- **in that** the values for the correlation-word sub-units X to M are produced from the sequence elements 1 to M-(X-1) in the basic sequence (x), and
- **in that** the values for the correlation-word sub-units 1 to X-1 are produced from the sequence elements M-(X-1)+1 to M in the basic sequence (x).

**22.** Method according to one or more of Claims 17 to 21, **characterized in that** the correlation sequence comprises basic sequences (x) arranged one behind the other, with the basic sequences (x) each having a mathematical sign applied to them, which is predetermined by a complementary sequence (y).

**23.** Method according to Claim 22, **characterized**

- **in that** the section of the correlation sequence which is used for production of the correlation word (112) is one of the basic sequences (x) to which mathematical signs have been applied in the correlation sequence.

**24.** Method according to one or more of Claims 14 to 23, **characterized**

- **in that** the sample values of the data word (111) are read from the data memory (12) in a reading step, in accordance with the reading rule.

**25.** Method according to one or more of Claims 14 to 24, **characterized**

- **in that** the data memory (12) is a ring data buffer.

**26.** Method for synchronization of a mobile radio receiver to a time-slot structure, and in particular a frame structure of a radio signal received from a base station, with the mobile radio system being based in particular on the UMTS Standard, using a method according to one or more of Claims 14 to 25.

## Revendications

**1.** Dispositif (11) pour effectuer une corrélation dans un système de téléphonie mobile, comprenant

- une mémoire (12) de données pour mémoriser une suite de valeurs (110) d'échantillonnage d'un signal reçu,
- un générateur (13) d'adresse pour produire des adresses de lecture d'un mot (111) de données dans la mémoire (12) de données suivant une prescription de la lecture donnée à l'avance, dans lequel le mot (111) de données contient les valeurs d'échantillonnage d'une partie de la suite de valeurs (110) d'échantillonnage et l'ordre des valeurs d'échantillonnage à l'intérieur du mot (111) de données est déterminé par l'ordre des valeurs d'échantillonnage à l'intérieur de la partie, par la prescription de lecture et par la structure d'organisation de la mémoire (12) de données,
- un générateur (15) de code pour la production d'une valeur (112) de corrélation à partir d'une suite de corrélation donnée à l'avance, le mot (112) de corrélation étant produit à partir des éléments d'une partie de la suite de corrélation et les éléments de la suite étant, dans le mot (112) de corrélation, disposés dans un ordre qui dépend du mot (111) de données, et
- une unité (14) formant corrélateur, pour la corrélation du mot (111) de données au mot (112) de corrélation.

**2.** Dispositif (11) suivant la revendication 1,
**caractérisé en ce que**

- la mémoire (12) de données a M sous-mémoires (RAM, BANK 1 ...., RAM BANK 16) adressables de manière séparée.

**3.** Dispositif (11) suivant la revendication 2,
**caractérisé en ce que**

- on passe d'une manière continue et cyclique dans les sous-mémoires (RAM, BANK 1 ..., RAM BANK 16) pour la mémorisation des valeurs d'échantillonnage,
- **en ce que** respectivement N valeurs d'échantillonnage enregistrées l'une après l'autre son mémorisées dans une sous-mémoire (RAM, BANK 1 ..., RAM BANK 16), et
- **en ce que** notamment N = 1.

**4.** Dispositif (11) suivant l'une quelconque des revendications précédentes,
**caractérisé**

- **en ce qu'**une suite (x) de base est à la base de la suite de corrélation.

**5.** Dispositif (11) suivant la revendication 4,
**caractérisé**

- **en ce que**, pour la production du mot (112) de corrélation, on parcourt cycliquement la suite (x) de base en commençant par un élément de la suite.

**6.** Dispositif (11) suivant l'une ou plusieurs des revendications 2 à 5,
**caractérisé**

- **en ce que** le mot (111) de donnée a M valeurs d'échantillonnage,
- **en ce que** la suite (x) de base a M éléments,
- **en ce que** le générateur (13) d'adresse associe au mot (111) de données exactement une valeur d'échantillonnage prise dans chaque sous-mémoire (RAM, BANK 1 ...., RAM BANK 16).

**7.** Dispositif (11) suivant la revendication 6, **caractérisé**

- **en ce que** les sous mémoires (RAM, BANK 1 ...., RAM BANK 16) sont numérotées conceptuellement à la suite de 1 à M,
- **en ce que** les valeurs d'échantillonnage du mot (111) de données sont associées respectivement à une sous-unité, les sous-unités du mot de données étant numérotées conceptuellement à la suite de 1 à M,
- **en ce que** le générateur (13) d'adresse prescrit, pour la lecture du mot (111) de données suivant la prescription de lecture, une adresse (x) de début, l'adresse (x) de début caractérisant une sous-mémoire (RAM, BANK 1 .... , RAM BANK 16),
- **en ce qu'**aux sous-unités de mot de données X à M sont affectées des valeurs d'échantillonnage des sous-mémoires X à M (RAM, BANK 1 .... , RAM BANK 16),
- **en ce qu'**aux sous-unités de mot de données 1 à X-1 sont affectées des valeurs d'échantillonnage des sous mémoires 1 à X-1 (RAM, BANK 1 .... , RAM BANK 16), et
- **en ce que** les valeurs d'échantillonnage affectées aux sous-unités de mots de données X, ..., M, 1, ..., X-1 sont enregistrées successivement dans le temps dans l'ordre indiqué.

**8.** Dispositif (11) suivant la revendication 7,
**caractérisé**

- **en ce que** les éléments de la suite (x) de base sont numérotés conceptuellement à la suite de 1 à M,
- **en ce que** les éléments de la suite dans le mot (112) de corrélation sont affectés respectivement à une sous-unité de mot de corrélation, les sous-unités de mot de corrélation étant numérotées conceptuellement à la suite de 1 à M,
- **en ce que** les valeurs pour les sous-unités de mot de corrélation X à M sont produites à partir des éléments 1 à M-(X-1) de la suite (x) de base, et
- **en ce que** les valeurs pour les sous-unités de mot de corrélation 1 à X-1 sont produites à partir des éléments M-(X-1)+1 à M de la suite (x) de base.

**9.** Dispositif (11) suivant l'une ou plusieurs des revendications 4 à 8,
**caractérisé**

- **en ce que** la suite de corrélation se compose d'une succession de suites (x) de base, les suites (x) de base étant pourvues respectivement d'un signe qui est prescrit par une suite (y) complémentaire.

**10.** Dispositif (11) suivant la revendication 9,
**caractérisé**

- **en ce que** la partie de la suite de corrélation, qui est utilisée pour la production du mot (112) de corrélation, est l'une des suites (x) de base, affectée d'un signe, de la suite de corrélation.

**11.** Dispositif (11) suivant l'une ou plusieurs des revendications précédentes,
**caractérisé**

- **en ce que** les valeurs d'échantillonnage du mot (111) de données sont lues dans la mémoire (12) de données dans un stade de lecture suivant la prescription de lecture.

**12.** Dispositif (11) suivant l'une ou plusieurs des revendications précédentes,
**caractérisé**

- **en ce que** la mémoire (12) de données est un tampon de données en anneau.

**13.** Utilisation du dispositif (11) suivant l'une ou plusieurs des revendications précédentes pour la synchronisation d'un récepteur de téléphonie mobile avec une structure de créneau temporel et notamment avec une structure de trame d'un signal radio reçu par une station de base, le système de téléphonie mobile reposant notamment sur la norme UMTS.

**14.** Procédé pour effectuer une corrélation dans un système de téléphonie mobile comprenant les stades de procédé suivants :

(a) on mémorise une suite de valeurs (110) d'échantillonnage d'un signal reçu dans une mémoire (12) de données ;
(b) on produit des adresses pour la lecture d'un mot (111) de données dans la mémoire (12) de données suivant une prescription de lecture donnée à l'avance, dans lequel le mot (111) de données contient les valeurs d'échantillonnage d'une partie de la suite de valeurs (110) d'échantillonnage et l'ordre des valeurs d'échantillonnage à l'intérieur du mot (111) de données est déterminé par l'ordre des valeurs d'échantillonnage à l'intérieur de la partie, par la prescription de la lecture et par la structure d'organisation de la mémoire (12),
(c) on produit un mot (112) de corrélation à partir d'une suite de corrélation donnée à l'avance, le mot (112) de corrélation étant produit à partir des éléments d'une partie de la suite de corrélation et les éléments de la suite étant, dans un mot (112) de corrélation, disposée dans un ordre qui dépend du mot (111) de données ; et
(d) on met le mot (111) de données en corrélation avec le mot (112) de corrélation.

**15.** Procédé suivant la revendication 14,
caractérisé

- la mémoire (12) de données a M sous-mémoires (RAM, BANK 1 ...., RAM BANK 16) adressables de manière séparée.

**16.** Procédé suivant la revendication 15,
caractérisé

- on passe d'une manière continue et cyclique dans les sous-mémoires (RAM, BANK 1 ...., RAM BANK 16) pour la mémorisation des valeurs d'échantillonnage,
- en ce que respectivement N valeurs d'échantillonnage enregistrées l'une après l'autre sont mémorisées dans une sous-mémoire (RAM, BANK 1 ...., RAM BANK 16), et
- en ce que notamment N = 1.

**17.** Procédé suivant l'une ou plusieurs des revendications 14 à 16,
**caractérisé**

- **en ce qu'**une suite (x) de base est à la base de la suite de corrélation.

**18.** Procédé suivant la revendication 17,
**caractérisé**

- **en ce que**, pour la production du mot (112) de corrélation, on parcourt cycliquement la suite (x) de base en commençant par un élément de la suite.

**19.** Procédé suivant l'une ou plusieurs des revendications 15 à 18,
**caractérisé**

- **en ce que** le mot (111) de données a M valeurs d'échantillonnage,
- **en ce que** la suite (x) de base a M éléments de la suite, et
- **en ce que** exactement une valeur d'échantillonnage prise est affectée au mot (111) de données de chaque sous-mémoire (RAM, BANK 1 ...., RAM BANK 16).

**20.** Procédé suivant la revendication 19,
**caractérisé**

- **en ce que** les sous-mémoires (RAM, BANK 1 ...., RAM BANK 16) sont numérotées conceptuellement à la suite de 1 à M,
- **en ce que** les valeurs d'échantillonnage dans le mot de données sont affectées respectivement à une sous-unité de mot de données, les sous-unités de mot de données étant numérotées conceptuellement à la suite de 1 à M,
- **en ce que** l'on prescrit, pour la lecture du mot (111) de données suivant la prescription de lecture, une adresse (X) de début, l'adresse (X) de début caractérisant une sous-mémoire (RAM, BANK 1 ...., RAM BANK 16),
- **en ce qu'**aux sous-unités de mot de données X à M sont affectées des valeurs d'échantillonnage des sous-mémoires X à M (RAM, BANK 1 ...., RAM BANK 16),
- **en ce qu'**aux sous-unités de mot de données 1 à X-1 sont affectées des valeurs d'échantillonnage des sous-mémoires 1 à X-1 (RAM, BANK 1 ...., RAM BANK 16), et
- **en ce que** les valeurs d'échantillonnage affectées aux sous-unités de mots de données X, ..., m, 1, ..., X-1 sont enregistrées successivement dans le temps dans l'ordre indiqué.

**21.** Procédé suivant la revendication 20,
**caractérisé**

- **en ce que** les éléments de la suite (x) de base sont numérotés conceptuellement à la suite de 1 à M,
- **en ce que** les éléments de la suite dans le mot (112) de corrélation sont affectés respectivement à une sous-unité de mot de corrélation, les sous-unités de mot de corrélation étant numérotées conceptuellement à la suite de 1 à M,
- **en ce que** les valeurs pour les sous-unités de mot de corrélation X à M sont produites à partir des éléments 1 à M-(X-1) de la suite (x) de base, et
- **en ce que** les valeurs pour les sous-unités de mot de corrélation 1 à X-1 sont produites à partir des éléments M-(X-1)+1 à M de la suite (x) de base.

**22.** Procédé suivant l'une ou plusieurs des revendications 17 à 21,
**caractérisé**

- **en ce que** la suite de corrélation se compose d'une succession de suites (x) de base, les suites (x) de base étant pourvues respectivement d'un signe qui est prescrit par une suite (y) complémentaire.

**23.** Procédé suivant la revendication 22,
**caractérisé**

- **en ce que** la partie de la suite de corrélation qui est utilisée pour la production du mot (112) de corrélation est l'une des suites (x) de base affectée d'un signe de la suite de corrélation.

**24.** Procédé suivant l'une ou plusieurs des revendications 14 à 23,
**caractérisé**

- **en ce que** les valeurs d'échantillonnage du mot (111) de données sont lues dans la mémoire (12) de données dans un stade de lecture suivant la prescription de lecture.

**25.** Procédé suivant l'une ou plusieurs des revendications 14 à 24,
**caractérisé**

- **en ce que** la mémoire (12) de données est un tampon de données en anneau.

**26.** Procédé de synchronisation d'un réception de téléphonie mobile à une structure de créneau temporel et notamment à une structure de trame d'un signal radio reçu par une station de base, le système de téléphonie mobile reposant notamment sur la norme UMTS, par un procédé suivant l'une ou plusieurs des revendications 14 à 25.

FIG 1
1
2
3
6
7
8
9
10
1
2
3
4
5
6
7
8
9
10
11
12
13
14
15
16
17
18
19
20
4
101
5
102
100

FIG 2

11
13
14
111
15
2
1
0
110
12
15
Σ
112
113
15
0
114
16

FIG 3

12
110
17
RAM BANK 1
RAM BANK 2
RAM BANK 3
RAM BANK 4
RAM BANK 15
RAM BANK 16
111

FIG 4
12
12
12
111
Auslesen von Abtastwerten aus dem Eigangsdatenpuffer 17
A16
A0
A0
A1

FIG 5
1. Korrelationsdurchgang
2. Korrelationsdurchgang
1
2
3
15
16
1
x13 x14 x15 x0 x1 x2 x3 x4 x5 x6 x7 x8 x9 x10 x11 x12
x3 x4 x5 x6 x7 x8 x9 x10 x11 x12 x13 x14 x15 x0 x1 x2
x
y
15
12
112
111
a+1
a

FIG 6
x
y
15
12
112
111
1. Korrelationsdurchgang
2. Korrelationsdurchgang
Startwert für den ersten Korrelationsdurchgang
Startwert für den zweiten Korrelationsdurchgang

FIG 7

120
121
12
15
add16
add2
add1
add0
Referenz
x
y
add0
add1
add2
add15
16
18
1
16
16
112
20
19

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- US 20010048713 A1